(19)

**Europäisches Patentamt**
**European Patent Office**
**Office européen des brevets**

(11) **EP 4 704 364 A1**

(12) **EUROPEAN PATENT APPLICATION**

(43) Date of publication:
**04.03.2026 Bulletin 2026/10**

(21) Application number: **24306399.7**

(22) Date of filing: **26.08.2024**

(51) International Patent Classification (IPC):
**H04L 9/00** (2022.01)     **H04L 9/08** (2006.01)
**H04L 9/30** (2006.01)

(52) Cooperative Patent Classification (CPC):
**H04L 9/003; H04L 9/085; H04L 9/3093**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **VIGILANT, David**
  **92240 MALAKOFF (FR)**
• **PERION, Fabrice**
  **75006 PARIS (FR)**

(74) Representative: **Bricks, Amélie**
**Thales Dis France SAS**
**Intellectual Property Department**
**6, rue de la Verrerie**
**92190 Meudon (FR)**

(54) **METHOD FOR PROTECTING AGAINST SIDE-CHANNEL ATTACKS LATTICE-BASED POST QUANTUM CRYPTOGRAPHIC SCHEMES**

(57)     The present invention relates to a method for securing against side channel attacks execution of a Compress function designed to be used in a decapsulation algorithm of a Kyber Lattice-based Post Quantum cryptographic key-encapsulation mechanism, wherein said Compress function converts an input polynomial $P(X)$ into an output polynomial $B(X)$ such that each coefficient bi of the output polynomial $B(x)$ equals 1 if the corresponding coefficient $P_i$ of the input polynomial $P(X)$ is in $](q-1)/4, 3(q-1)/4[$ and $b_i$ equals 0 otherwise, with $i$ in $\{1,..,n\}$, $n$ being an integer and $q$ being a prime number, each coefficient $P_i$ of said input polynomial $P(x)$ being masked using an arithmetic splitting masking and represented by L arithmetic shares $A_i^1, A_i^2, ...,A_i^L$ such that $A_i^1 + A_i^2 + ... + A_i^L = P_i$ modulo $q$, with L an integer, and each coefficient bi of said output polynomial $B(X)$ being masked with a Boolean splitting masking and represented by a plurality of Boolean shares, said method being performed by the key requesting device comprising a processor and a memory and comprising, instead of applying Compress function to said input polynomial $P[X]$, for each coefficient $P_i$ of said input polynomial $P(X)$:
- obtaining said L polynomial shares $A_i^1, A_i^2, ..., A_i^L$ of said coefficient $P_i$,
- for each polynomial share $A_i^j$ with $j$ in $\{1,...,L\}$, computing an intermediate share $v_i^j$ equal to 0 when $floor(([2A_i + Z_j.(q-1)/2] / q )$ is even and equal to 1 when it is odd with $Z^j$ such that $Z^1 + Z^2 + ... + Z^L = 1$ and $Z_j.(q-1)/2$ is an integer,
- computing an additional intermediate share $v_i^{L+1}$ equal to 0 when $floor(([ \Sigma_j(2 A_i^j + Z^j.(q-1)/2) \bmod q)]/q)$ is even and equal to 1 when it is odd,
- obtaining said plurality of Boolean shares $(b_i^1, b_i^2, ...., b_i^L)$ from said L computed intermediate shares $(v_i^1, ..., v_i^L)$

and said computed additional intermediate share $(v_i^{L+1})$.

[Fig. 6]

EP 4 704 364 A1

## Description

### FIELD OF THE INVENTION

The present invention relates to the field of cryptographic schemes, and of associated cryptographic devices, and more particularly to protecting against side-channel attacks lattice-based post quantum cryptographic schemes.

### BACKGROUND OF THE INVENTION

The increasing computational power of quantum computers is a growing threat to the security of classical cryptographic schemes such as RSA or ECDSA. Such schemes will eventually be completely defenseless against attacks performed using quantum computers. Therefore, work is being done to develop new efficient schemes that would be resistant against such attacks.

Lattice based schemes have been proved resistant to quantum computer attacks. Among this class of schemes, Dillithium and Kyber have been selected by the NIST to become Post-Quantum Cryptography standards for supporting respectively signature and encryption.

Nevertheless, such cryptographic algorithms may be sensitive to side-channel attacks, based on an analysis of the power consumption or electromagnetic signature of the device performing the encryption.

Kyber cryptographic scheme full description can be found in « CRYSTALS-KYBER Algorithm Specifications And Supporting Documentation (version 3.02) » by R. Avanzi, J. Bos, L. Ducas, E. Kiltz, T. Lepoint, V. Lyubashevsky, J. M. Schanck, P. Schwabe, G. Seiler, D. Stehlé, August 4, 2021. In the rest of this document, this reference is referred to as "KYBER Documentation reference".

More specifically, CRYSTALS-Kyber cryptographic scheme comprises a Key Encapsulation Mechanism (KEM) enabling two entities to securely exchange a shared secret K, such as a shared key to be used as a session key. This KEM has been standardized by the NIST as the Module-Lattice-based KEM (ML-KEM) in the publication "FIPS203 - Module-Lattice-based Key-Encapsulation Mechanism Standard". Such a KEM comprises a key encapsulation algorithm (algorithm 8 of KYBER Documentation reference; algorithm 16 of ML-KEM Documentation reference) enabling a first entity to generate from the public key pk of the second entity the shared secret K and a ciphertext c, and a decapsulation algorithm (algorithm 9 of KYBER Documentation reference; algorithm 17 of ML-KEM Documentation reference) enabling the second entity to retrieve the shared secret K from the ciphertext c using its private key sk. Such a decapsulation algorithm uses a Compress function (called $Compress_q$ in KYBER Documentation reference or called Compress in ML-KEM documentation reference) which is in charge of converting polynomial coefficients generated from the ciphertext c into bits of the shared secret K, using the secret key of the second entity. Therefore, the input and output of the Compress function is sensitive data which should be protected against any access by anyone other than the two entities cooperating in the Key Exchange Mechanism. Indeed, an attacker gaining knowledge of part of the processed data would gain knowledge of at least part of either the shared secret K or the secret key of the second entity and may eventually be able to retrieve the shared secret K.

A problem is that the Compress function manipulates the coefficients of its polynomial input one by one for generating corresponding bits of the shared secret K. Therefore, it would be fairly easy for an attacker to guess the value of the coefficients of the polynomial used as input to the function from a side-channel analysis of the operations performed by the Compress function when it processes each coefficient of its input.

Therefore, there is a need of a method performing the key decapsulation algorithm of Kyber KEM or ML-KEM and being protected against side channel analysis when performing the step of generating the bits of the shared secret K which is performed by the Compress function in existing implementations of such a scheme.

### SUMMARY OF THE INVENTION

For this purpose and according to a first aspect, this invention therefore relates to a method for securing against side channel attacks execution of a Compress function designed to be used in a decapsulation algorithm of a Kyber Lattice-based Post Quantum cryptographic key-encapsulation mechanism, said decapsulation algorithm generating, from a secret key sk of a key requesting device and a ciphertext c transmitted by a key generation device, a key (K) to be shared between said key requesting device and said key generation device, wherein said Compress function converts an input polynomial P(X) in a polynomial ring $R_q = F_q[X]/(X^n+1)$ into an output polynomial B(X) in a polynomial ring $R_2$ such that each coefficient bi of the output polynomial B(x) equals 1 if the corresponding coefficient $P_i$ of the input polynomial P(X) is in $](q-1)/4, 3(q-1)/4[$ and $b_i$ equals 0 otherwise, with i in {1,..,n}, n being an integer and q being a prime number,

each coefficient Pi of said input polynomial P(x) being masked using an arithmetic splitting masking and represented by L arithmetic shares $Ai^1$, $Ai^2$, ... ,$Ai^L$ such that $Ai^1 + Ai^2 + ... + Ai^L = Pi$ modulo q, with L an integer, and
each coefficient bi of said output polynomial B(X) being masked with a Boolean splitting masking and represented by a plurality of Boolean shares,
said method being performed by the key requesting device comprising a processor and a memory and comprising, instead of applying Compress function to said input polynomial P[X], for each coefficient $P_i$

of said input polynomial P(X):

- obtaining said L polynomial shares $A^1_i$, $A^2_i$, ..., $A^L_i$ of said coefficient $P_i$,
- for each polynomial share $A^j_i$ with j in {1,... ,L}, computing an intermediate share $v^j_i$ equal to 0 when floor($[2A^j_i + Z^j.(q-1)/2] / q$ ) is even and equal to 1 when it is odd, with $Z^j$ such that $Z^1 + Z^2 + ...+ Z^L = 1$ and $Z^j.(q-_1)/2$ is an integer,
- computing an additional intermediate share $v^{L+1}_i$ equal to 0 when floor( [ $\Sigma_j(2 A^j_i + Z^j.(q-1)/2)$ mod q) ] / q) is even and equal to 1 when it is odd,
- obtaining said plurality of Boolean shares ($b^1_i$, $b^2_i$ ,...,$b^L_i$) from said L computed intermediate shares $v^1_i$, ..., $v^L_i$ and said computed additional intermediate share $v^{L+1}_i$.

Such a method enables to generate, from the arithmetic shares of a coefficient $P_i$ of the input polynomial P(X), a coefficient $b_i$ of the output polynomial B(X) which is split as a plurality of Boolean shares without performing any costly Arithmetic to Boolean conversion of the shares.

q may be a 12-bit prime and n may be equal to 256.

According to an embodiment, when L= 2, the method according to the first aspect may comprise :

- generating a random value R0 in [0;q[,
- updating said second polynomial share $A^2_i$ such that $A^2_i = (A^1_i - R0 + A^2_i$ modulo q),
- computing a first intermediate share $v^1_i = $ floor( $(2 A^1_i + (q-1)/2) / q$) &1,
- computing a second intermediate share $v^2_i = $ floor (($2 A^2_i /q$)) &1,
- computing an additional intermediate share $v^3_i$ equal to 1 when (( [2 $A^1_i$ + (q-1)/2 mod q] + [2 $A^2_i$ mod q] )>= q and equal to 0 otherwise,
- obtaining a first Boolean share $b1 = v^1_i$ and a second Boolean share $b2 = v^2_i$ XOR $v^3_i$.

Said additional intermediate share $v^3_i$ may be computed using a multiplicative masking.

Obtaining said plurality of Boolean shares ($b^1_i$, $b^2_i$,...,$b^L_i$ ) from said L computed intermediate shares and said computed additional intermediate share may comprise performing XOR operations.

The coefficients $P_i$ of said input polynomial P(X) may be processed in random order.

It makes it harder for an attacker performing high-level side channel attacks to determine which collected traces correspond to which coefficient of the output polynomial.

The Compress function may be Compress function from Module-Lattice-based Key-Encapsulation Mechanism Standard or Compress$_q$ function from CRYSTALS-KYBER Algorithm Specification.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a cryptographic device comprising a processor and a memory configured for performing the steps of the method according to the first aspect.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of the Kyber decapsulation algorithm and of the Kyber Decryption algorithm given in KYBER Documentation reference;
- Figure 2 is a schematic illustration of the Compress$_q$ function given in KYBER Documentation reference;
- Figure 3 is a schematic illustration of the Decoder function given in KYBER Documentation reference;
- Figure 4 is a schematic illustration of a key requesting device according to an embodiment of the present invention;
- Figures 5 and 6 are schematic illustrations of the method according to an embodiment of the present invention;

## DETAILED DESCRIPTION OF EMBODIMENTS OF THE INVENTION

The invention relates to methods, and associated devices, for securing against side channel attacks an execution of a Compress function: the Compress$_q$ function used in the decapsulation algorithm of a Kyber Lattice-based Post Quantum cryptographic key-encapsulation mechanism, or equivalently the Compress function used in the decapsulation algorithm of ML-KEM. In the rest of the description, this Compress function is called Compress$_q$ and the invention is described in the case of the decapsulation algorithm of Kyber KEM but of course it also applies to the standardized implementation of the NIST called ML-KEM described in FIPS203 in which the Compress function is simply called "Compress".

In this key-encapsulation mechanism, a key generation device and a key requesting device exchange information to share a secret key. The key generation device uses a public key of the key requesting device to generate a ciphertext c and transmits it to the key requesting device. The key requesting device then performs said decapsulation algorithm to retrieve, from the ciphertext c, using its secret key the secret key K to be shared between the key generation device and the key requesting device.

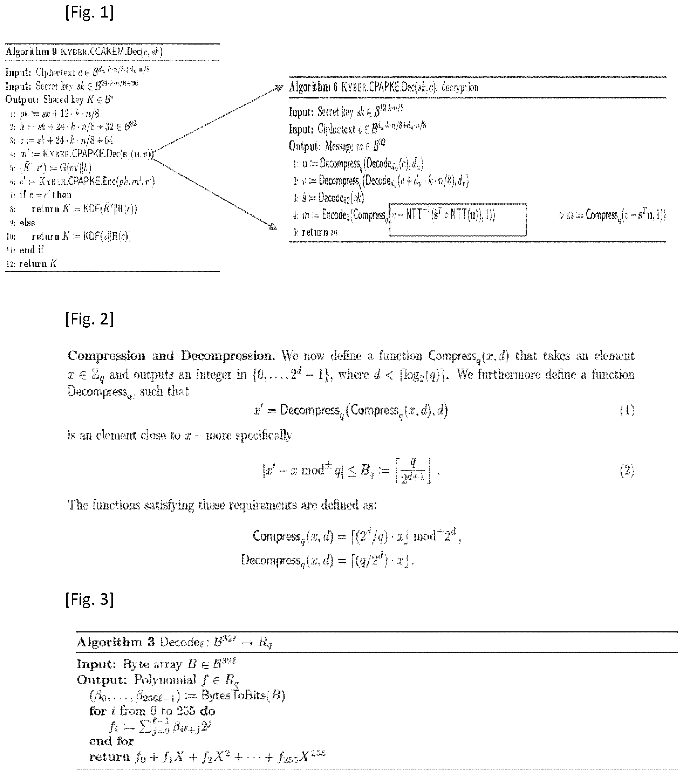

As shown on **Figure 1**, Kyber decapsulation algorithm (algorithm 9 of KYBER Documentation reference) calls Kyber Decryption algorithm (algorithm 6 of KYBER Documentation reference), which in turn calls the $Compress_q$ function. A general definition of this $Compress_q$ function is given in KYBER Documentation reference and reproduced on **Figure 2** as $Compress_q(x, d) = round((2^d/q) * x)\ mod^+\text{-}\ 2^d$ with x in Zq, q being a prime number and d an integer. $mod^+\text{-}$ operator can be defined the following way: for two integers r and m, m being even, $r\ mod^+\text{-}\ m$ is the unique integer r' such that $-m/2 < r' \le m/2$ and such that m divides r-r'. In KYBER Documentation reference q=3329. When the first argument of $Compress_q$ function is a polynomial, it is applied, as defined above, sequentially to each coefficient of the polynomial used as input.

Kyber Decryption algorithm (algorithm 6 of KYBER Documentation reference) calls $Compress_q(x, d)$ function, on line 4, using as argument x an input polynomial, hereafter called P(X), which is in a polynomial ring $R_q = F_q[X]/(X^n+1)$ and is obtained from the ciphertext c received from the key generation device and from the secret key sk of the key requesting device, with n an integer. In KYBER Documentation reference n=256.

In this call to the function $Compress_q$ the second argument of the function is taken equal to 1. Given the general definition of $Compress_q(x; d)$ given above, the execution of $Compress_q(x, 1)$ generates, from the input polynomial P(X), an output polynomial B(X), in the polynomial ring $R_2$, such that each coefficient bi of the output polynomial B(x) equals 1 if the corresponding coefficient $P_i$ of the input polynomial P(X) is in $](q-1)/4, 3(q-1)/4[$ and $b_i$ equals 0 otherwise.

The secret key K to be shared between the key generating device and the key requesting device is then generated from the output polynomial B(X) using a function $Encode_1$ which serializes the 256 coefficients of the polynomial into a binary string of length 32 bytes. $Encode_1$ function corresponds to the function $Encode\ell$ with $\ell$=1. A general definition of the function Decoder which is the inverse of the Encoder function is given in KYBER Documentation reference and reproduced on **Figure 3.**

In existing Kyber implementations, the input and output values of the $Compress_q$ function are protected using masks: the coefficients of the input polynomial P(X), which are in [0,q[, are masked using an arithmetic splitting masking; and the coefficients of the output polynomial B(X), which are binary values, are masked using a Boolean splitting masking. Therefore, such implementations embed in $Compress_q$ function an Arithmetic to Boolean conversion of the polynomial coefficients shares, which is a costly operation.

Therefore, the present invention aims at providing an alternative implementation of the $Compress_q$ function which takes as input an input polynomial masked using an arithmetic splitting and outputs an output polynomial with Boolean splitting masking of its coefficients, without performing any Arithmetic to Boolean conversion of shares.

In the rest of this description, any reference to the execution of the $Compress_q$ function refers to the execution of the $Compress_q$ function as defined in Kyber specification when called by Kyber Decryption algorithm using as argument d=1. It is noted $Compress_q(x,1)$ or more simply just $Compress_q$.

The method according to the invention may be performed by a key requesting device. Such a device may for example be a personal computer or a server. It may also be a tamper-proof device such as a Hardware Security Module HSM. It may also be a smaller device such as a smartchip.

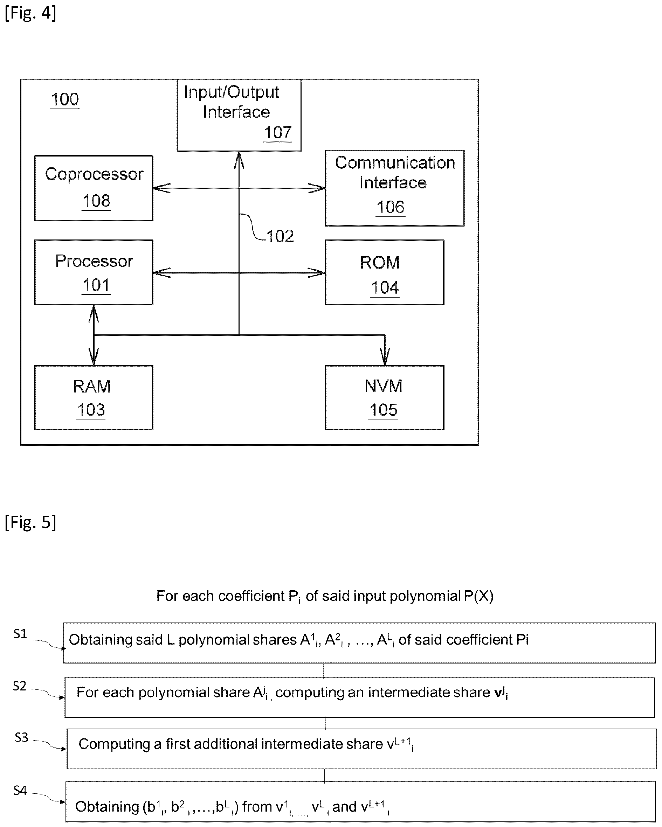

**Figure 4** is a schematic illustration of such a key requesting device 100. It may include a processor 101 connected via a bus 102 to a random-access memory (RAM) 103, a read-only memory (ROM) 104, and/or a non-volatile memory (NVM) 105. The processor 101 may further include a communication interface 106 connected to the bus and which may be used to connect the device to various forms of wireless networks, e.g., wide-area networks, WiFi networks, or mobile telephony networks, or to wired networks such as an Ethernet network, which may be used to communicate with the key requesting device. It may also include an input-output interface 107 providing interfaces to an administrator, such as one or more screens, loudspeakers, a mouse, tactile surfaces, a keyboard etc... The key requesting device may further include a coprocessor 108. This coprocessor may be dedicated to performing cryptographic computations. For example, it may be a hardware accelerator, such as a FPGA or an ASIC, implementing an extendable output function. This coprocessor may be a separate chip in the device, or it may be included with the processor in a SoC.

In order to generate an output polynomial B(X) whose coefficients bi are each masked by a Boolean splitting masking from the arithmetically masked corresponding coefficient Pi of the input polynomial P(X) without performing any Arithmetic to Boolean conversion, a first idea of the invention is to express each coefficient Pi of the input polynomial as a sum of arithmetic shares.

For each share of the coefficient Pi, an arithmetic share of (q-1)/2 is generated. Then each polynomial coefficient share is multiplied by 2 and then summed with exactly one share of (q-1)/2. Each arithmetic masking share can be translated into a Boolean masking share for the coefficient bi, without Arithmetic to Boolean conversion, depending on the parity of the quotient of the division of the share by q. Nevertheless, coefficient bi generated this way would not take into account the fact that the sum of the remainders of these divisions can be greater than q and change the quotient parity.

Therefore, a second main idea of the invention is to generate similarly an extra Boolean masking share for considering into the Boolean masking the sum of these remainders, such that XORing all the shares directly obtained from the arithmetic shares of the coefficient Pi and this extra share would give the correct value of the corresponding coefficient bi of the output polynomial.

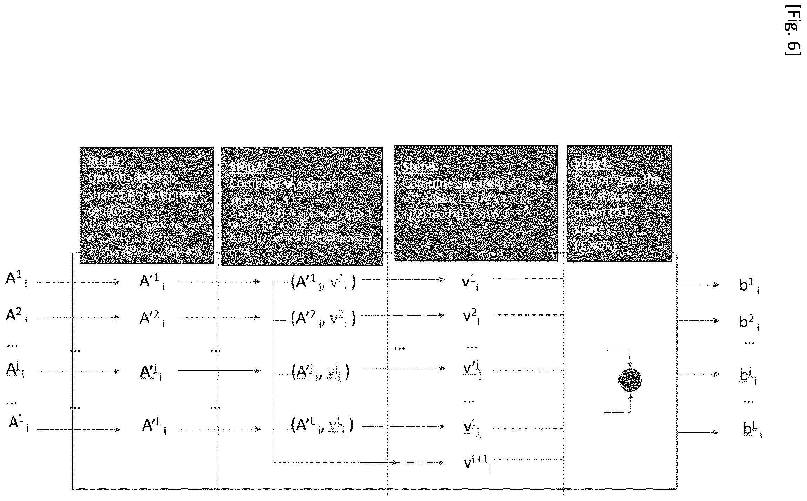

More precisely, the following steps, illustrated on **Figure 5 and on Figure 6,** may be performed repeatedly by the key requesting device to determine from each coefficient Pi, for any value of i between 0 and n, of the input polynomial P(X) the corresponding Boolean shares which when XORed together are equal to the coefficient bi of the output polynomial B(X), instead of computing $Compress_q(P(X),1)$ as instructed in original Kyber Encryption algorithm.

In a first step S1, the key requesting device splits the coefficient Pi of the input polynomial according to an arithmetic splitting and obtains L polynomial shares $A^1_i$, $A^2_i$, ..., $A^L_i$ with L a predetermined integer. These polynomial shares are such that $\sum_{j=1}^{L} A^j_i = Pi$ modulo q.

Optionally, for increasing the randomness of the polynomial shares, the key requesting device may update the L polynomial shares $(A^1_i, A^2i, ..., A^L_i)$ obtained at the first step S1. For a better clarity, in this paragraph, and on Figure 6, their updated values are called transformed polynomial shares $(A'^1_i, A'^2_i, ..., A'^L_i)$ but in the rest of the description, the polynomial shares, updated or not, are always called polynomial shares $(A^1_i, A^2i, ..., A^L_i)$. For updating the L polynomial shares $(A^1_i, A^2_i, ..., A^L_i)$, the key requesting device may generate L-1 random values and set L-1 transformed polynomial shares $(A'^1_i, A'^2_i, ..., A'^{L-1}_i)$ to these random values. Then the last transformed polynomial share $A'^L_i$ may be computed as $A'^L_i = A^L_i + \sum_{j<L} (A^j_i - A'^j_i)$

In a second step S2, for each polynomial share $A^j_i$, with j in {1, ... ,L}, the key requesting device computes an intermediate share $v^j_i$ equal to 0 when floor $([2A^j_i + Z^j.(q-1)/2] / q)$ is even and equal to 1 when it is odd. The $Z^j$ coefficients are such that $Z^1 + Z^2 + ...+ Z^L = 1$ and such that $Z^j.(q-1)/2$ is an integer. Optionally, all the $Z^j$ coefficients but one may be random and the non-random one may be selected such that $Z^1 + Z^2 + ...+ Z^L = 1$.

As an example, depicted on Figure 6, floor($[2A^j_i + Z^j.(q-1)/2] / q$) may be expressed as a binary value and $v^j_i$ may be computed as floor($[2A^j_i + Z^j.(q-1)/2] / q$) & 1 with & the bitwise AND operator.

The $Z^j$ coefficients used for computing intermediate shares $v^j_i$ for a given coefficient Pi may not be the same as the ones used for computing intermediate shares for another coefficient. As an example, a new set of $Z^j$ coefficients may be used for the computations performed for each coefficient.

Unfortunately, such intermediate shares are not sufficient for generating proper shares for a Boolean splitting masking of the coefficient bi of the output polynomial B(X). Indeed, the generated intermediate shares miss to take into account the remainder of their division by q/2. Therefore, the sum of the generated intermediate shares should be corrected in order to take into account the sum of these remainders.

To this end, in a third step S3, the key requesting device computes an additional intermediate share $v^{L+1}i$ equal to 0 when floor($[\sum_j(2 A^j_i + Z^j.(q-1)/2) \mod q)] / q$) is even and equal to 1 when it is odd. As an example, depicted on Figure 6, floor($[\sum_j(2 A^j_i + Z^j.(q-1)/2) \mod q)]/q$) may be expressed as a binary value and $v^j_i$ may be computed as floor($[\sum_j(2 A^j_i + Z^j.(q-1)/2) \mod q)]/q$) & 1, with & the bitwise AND operator.

Such a computation should be performed securely, using for example obfuscation techniques, in order not to expose the value of the additional intermediate share.

In a fourth step S4, the key requesting device obtains the Boolean shares of the coefficient bi of the output polynomial from the L intermediate shares $v^j_i$ and the additional intermediate share $v^{L+1}_i$.

Since the coefficient bi of the output polynomial B(X) may be retrieved by XORing the L intermediate shares $v^j_i$ and the additional intermediate share $v^{L+1}_i$, in an embodiment the coefficient bi is represented as masked using L+1 Boolean shares $b^j_i$ with j in {1, ..., L+1} such that $b^1_i \wedge b^2_i \wedge ... \wedge b^{L+1}_i = b_i$ by setting the L+1 shares $b^j_i$ simply equal to the L intermediate share $v^j_i$ and the additional intermediate share $v^{L+1}_i$.

Nevertheless, it may be desirable to have a coefficient bi split in only L shares, as the coefficient Pi of the input polynomial. Therefore, in another embodiment, the key requesting device may obtain L Boolean shares $b^1_i$, $b^2_i$,...,$b^L_i$ of the output polynomial coefficient from the L intermediate shares $v^1_i$, ..., $v^L_i$ computed for that coefficient and from the additional intermediate share $v^{L+1}_i$, computed for that coefficient. Such a reduction of L+1 shares to only L shares may be easily performed by performing a XOR operation or ADD operations between one of the computed intermediate shares and the additional intermediate share. Alternatively, an ADD operation between these two shares may be performed and the corresponding Boolean share may be equal to the parity of the sum.

The sequence of operations described above may slightly differ by using a different distribution over the described steps of the operations to be performed. For example, the intermediate shares $v^j_i$ may be equal to floor($[2A^j_i + Z^j(q-1)/2]/q$), and their parity may be determined later, by applying the &1 operation, at the fourth step S4 when computing the corresponding Boolean share $b^j_i$. Similarly, the floor operation may also be applied at the fourth step S4 rather than at the second step S2 and third step S3.

In order to generate the masked value of each coefficient bi of the output polynomial B(X), for i in {0,...,n} the steps described above have to be repeated for each coefficient Pi of the input polynomial P(X). In an embodiment, the coefficients $P_i$ of said input polynomial P(X) are processed in random order.

The following paragraphs give an example where L=2.

In the first step S1, the key requesting device splits the coefficient Pi of the input polynomial into two shares $A^1_i$, $A^2_i$ such that $A^1_i + A^2_i$ = Pi modulo q.

In this example, the two polynomial shares ($A^1_i$, $A^2_i$) of the coefficient Pi of the input polynomial may be updated by performing the following substeps.

In a first substep, the key requesting device may generate a random value R0 in [0;q[.

In a second substep, the key requesting device may update the second polynomial share $A^2_i$ as $A^2_i = (A^1_i - R0 + A^2_i$ modulo q).

In a third substep, the key requesting device may update the value of the first polynomial share $A^1_i$ to R0.

In the second step S2, the key requesting device computes two intermediate shares $v^j_i$ : $v^1_i$ = floor((2 $A^1_i$ + (q-1)/2) / q) & 1 and $v^2_i$ = floor($2A^2_i$ /q) &1. Such formulas assume that $Z^1$=1 and $Z^2$=0 and that the two floor values are expressed as binary values before applying the bitwise-and operators "&".In the third step S3, the key requesting device computes the additional intermediate share $v^3_i$ which is equal to 1 if ([2 $A^1_i$ + (q-1)/2 mod q] + [2 $A^2_i$ mod q]) is greater than q or equal to q. It is equal to 0 otherwise. Such a computation may be performed using a multiplicative masking. For example, it can be tested whether rnd1*[2 $A^1_i$ + (q-1)/2 mod q] rnd2 + rnd1*[2 $A^2_i$ mod q] - rnd1*q <= 0, where rnd2 < rnd1.

In the fourth step S4, the key requesting device obtains the Boolean shares of the coefficient bi of the output polynomial from the 2 intermediate shares $v^1_i$, $v^2_i$ and the additional intermediate share $v^3_i$.

For example, it can set b1 = $v^1_i$, b2 = $v^2_i$ and b3 = $v^3_i$.

In order to decrease the number of Boolean shares of the coefficient bi to two, the second share b2 may be set to ($v^2_i$ XOR $v^3_i$).

According to a second aspect, the invention is also related to a computer program product directly loadable into the memory of at least one computer, comprising software code instructions for performing the steps of the method described above when said product is run on the computer.

According to a third aspect, the invention is also related to a cryptographic device 100 comprising a processor 101 and a memory 103, 104, 105 configured for performing the steps of the method described above.

As a result, the method according to the invention enables to generate from each coefficient Pi of the input polynomial P(X), masked using an arithmetic splitting, a coefficient bi of the output polynomial B(X), masked using a Boolean splitting, without performing any Arithmetic to Boolean mask conversion. Such a method therefore requires much less resources than existing implementations of Kyber encapsulation method protecting the execution of the $Compress_q$ function using coefficient splitting but relying on Arithmetic to Boolean mask conversion, while providing a similar level of protection of this function against side channel attacks.

## Claims

1. A method for securing against side channel attacks execution of a Compress function designed to be used in a decapsulation algorithm of a Kyber Lattice-based Post Quantum cryptographic key-encapsulation mechanism,

said decapsulation algorithm generating, from a secret key sk of a key requesting device and a ciphertext c transmitted by a key generation device, a key (K) to be shared between said key requesting device and said key generation device,

wherein said Compress function converts an input polynomial P(X) in a polynomial ring $R_q = F_q[X]/(X^n+1)$ into an output polynomial B(X) in a polynomial ring $R_2$ such that each coefficient bi of the output polynomial B(x) equals 1 if the corresponding coefficient $P_i$ of the input polynomial P(X) is in ](q-1)/4, 3(q-1)/4[ and $b_i$ equals 0 otherwise, with i in {1,..,n}, n being an integer and q being a prime number,

each coefficient Pi of said input polynomial P(x) being masked using an arithmetic splitting masking and represented by L arithmetic shares $Ai^1$, $Ai^2$, ... ,$Ai^L$ such that $Ai^1 + Ai^2 + ... + Ai^L$ = Pi modulo q, with L an integer, and each coefficient bi of said output polynomial B(X) being masked with a Boolean splitting masking and represented by a plurality of Boolean shares, said method being performed by the key requesting device (100) comprising a processor (101) and a memory (103, 104, 105) and comprising, instead of applying Compress function to said input polynomial P[X], for each coefficient $P_i$ of said input polynomial P(X) :

- obtaining (S1) said L polynomial shares $A^1_i$, $A^2i$, ..., $A^L_i$ of said coefficient Pi,
- for each polynomial share $A^j_i$ with j in {1,...,L}, computing an intermediate share $v^j_i$ (S2) equal to 0 when floor([$2A^j_i$+ $Z^j$.(q-1)/2] / q ) is even and equal to 1 when it is odd, with $Z^j$ such that $Z^1 + Z^2 + ...+ Z^L = 1$ and $Z^j$.(q-1)/2 is an integer,
- computing (S3) an additional intermediate share $v^{L+1}i$ equal to 0 when floor([ $\Sigma_j$(2 $A_i$ + $Z^j$.(q-1)/2) mod q)]/q) is even and equal to 1 when it is odd,

- obtaining (S4) said plurality of Boolean shares ($b^1_i$, $b^2_i$,...,$b^L_i$) from said L computed intermediate shares ($v^1_i$, ..., $v^L_i$) and said computed additional intermediate share ($v^{L+1}_i$).

2. The method of claim 1, wherein q is a 12-bit prime and n = 256.

3. The method of claim 1 or 2, comprising, when L= 2:

- generating a random value R0 in [0;q[,
- updating said second polynomial share $A^2_i$ such that $A^2_i = (A^1_i - R0 _+ A^2_i$ modulo q),
- updating the value of the first polynomial share $A^1_i$ to R0,
- computing a first intermediate share $v^1_i =$ floor( (2 $A^1_i$ + (q-1)/2) / q) &1,
- computing a second intermediate share $v^2_i =$ floor ( (2 $A^2_i$ /q) ) &1,
- computing an additional intermediate share $v^3_i$ equal to 1 when ( ( [2 $A^1_i$ + (q-1)/2 mod q] + [2 $A^2_i$ mod q] )>= q and equal to 0 otherwise,
- obtaining a first Boolean share b1 = $v^1_i$ and a second Boolean share b2 = $v^2_i$XOR $v^3_i$.

4. The method of claim 3, wherein said additional intermediate share $v^3_i$ is computed using a multiplicative masking.

5. The method of any of claims 1 to 4, wherein obtaining said plurality of Boolean shares ($b^1_i$, $b^2_i$,...$b^L_i$) from said L computed intermediate shares and said computed additional intermediate share comprises performing XOR operations.

6. The method of any of claims 1 to 5, wherein the coefficients $P_i$ of said input polynomial P(X) are processed in random order.

7. The method of any of claims 1 to 6, wherein said Compress function is Compress function from Module-Lattice-based Key-Encapsulation Mechanism Standard or Compress$_q$ function from CRYSTALS-KYBER Algorithm Specification.

8. A computer program product directly loadable into the memory of at least one computer, comprising software code instructions for performing the steps of any one of claim 1 to 7 when said product is run on the computer.

9. A cryptographic device (100) comprising a processor (101) and a memory (103, 104, 105) configured for performing the steps of any one of claim 1 to 7.

[Fig. 1]

**Algorithm 9** KYBER.CCAKEM.Dec$(c, sk)$

**Input:** Ciphertext $c \in \mathcal{B}^{d_u \cdot k \cdot n/8 + d_v \cdot n/8}$
**Input:** Secret key $sk \in \mathcal{B}^{24 \cdot k \cdot n/8 + 96}$
**Output:** Shared key $K \in \mathcal{B}^*$
1: $pk := sk + 12 \cdot k \cdot n/8$
2: $h := sk + 24 \cdot k \cdot n/8 + 32 \in \mathcal{B}^{32}$
3: $z := sk + 24 \cdot k \cdot n/8 + 64$
4: $m' := \text{KYBER.CPAPKE.Dec}(s, (\mathbf{u}, v))$
5: $(\bar{K}', r') := G(m' \| h)$
6: $c' := \text{KYBER.CPAPKE.Enc}(pk, m', r')$
7: **if** $c = c'$ **then**
8:     **return** $K := \text{KDF}(\bar{K}' \| H(c))$
9: **else**
10:     **return** $K := \text{KDF}(z \| H(c))$
11: **end if**
12: **return** $K$

**Algorithm 6** KYBER.CPAPKE.Dec$(sk, c)$: decryption

**Input:** Secret key $sk \in \mathcal{B}^{12 \cdot k \cdot n/8}$
**Input:** Ciphertext $c \in \mathcal{B}^{d_u \cdot k \cdot n/8 + d_v \cdot n/8}$
**Output:** Message $m \in \mathcal{B}^{32}$
1: $\mathbf{u} := \text{Decompress}_q(\text{Decode}_{d_u}(c), d_u)$
2: $v := \text{Decompress}_q(\text{Decode}_{d_v}(c + d_u \cdot k \cdot n/8), d_v)$
3: $\hat{\mathbf{s}} := \text{Decode}_{12}(sk)$
4: $m := \text{Encode}_1(\text{Compress}_q\boxed{v - \text{NTT}^{-1}(\hat{\mathbf{s}}^T \circ \text{NTT}(\mathbf{u})), 1)}$    $\triangleright m := \text{Compress}_q(v - \mathbf{s}^T \mathbf{u}, 1)$
5: **return** $m$

[Fig. 2]

**Compression and Decompression.** We now define a function $\text{Compress}_q(x, d)$ that takes an element $x \in \mathbb{Z}_q$ and outputs an integer in $\{0, \ldots, 2^d - 1\}$, where $d < \lceil \log_2(q) \rceil$. We furthermore define a function $\text{Decompress}_q$, such that

$$x' = \text{Decompress}_q\big(\text{Compress}_q(x, d), d\big) \tag{1}$$

is an element close to $x$ – more specifically

$$|x' - x \bmod^{\pm} q| \leq B_q := \left\lceil \frac{q}{2^{d+1}} \right\rceil . \tag{2}$$

The functions satisfying these requirements are defined as:

$$\text{Compress}_q(x, d) = \lceil (2^d/q) \cdot x \rfloor \bmod^+ 2^d ,$$
$$\text{Decompress}_q(x, d) = \lceil (q/2^d) \cdot x \rfloor .$$

[Fig. 3]

**Algorithm 3** Decode$_\ell : \mathcal{B}^{32\ell} \to R_q$

**Input:** Byte array $B \in \mathcal{B}^{32\ell}$
**Output:** Polynomial $f \in R_q$
  $(\beta_0, \ldots, \beta_{256\ell-1}) := \text{BytesToBits}(B)$
  **for** $i$ from 0 to 255 **do**
    $f_i := \sum_{j=0}^{\ell-1} \beta_{i\ell+j} 2^j$
  **end for**
  **return** $f_0 + f_1 X + f_2 X^2 + \cdots + f_{255} X^{255}$

[Fig. 4]

[Fig. 5]

For each coefficient $P_i$ of said input polynomial P(X)

S1 — Obtaining said L polynomial shares $A^1_i$, $A^2_i$ , …, $A^L_i$ of said coefficient Pi

S2 — For each polynomial share $A^j_i$, computing an intermediate share $v^j_i$

S3 — Computing a first additional intermediate share $v^{L+1}_i$

S4 — Obtaining ($b^1_i$, $b^2_i$ ,…,$b^L_i$) from $v^1_i$, …, $v^L_i$ and $v^{L+1}_i$

[Fig. 6]

EP 4 704 364 A1

**Step1:**
Option: Refresh shares $A^j_i$ with new random
1. Generate randoms $A'^0_i, A'^1_i, ..., A'^{L-1}_i$
2. $A'^L_i = A^L_i + \sum_{j<L} (A^j_i - A'^j_i)$

**Step2:**
Compute $v^j_i$ for each share $A'^j_i$ s.t.
$v^j_i = floor([2A'^j_i + Z^j.(q-1)/2] / q) \& 1$
With $Z^1 + Z^2 + ... + Z^L = 1$ and $Z^j.(q-1)/2$ being an integer (possibly zero)

**Step3:**
Compute securely $v^{L+1}_i$ s.t.
$v^{L+1}_i = floor([\sum_j (2A'^j_i + Z^j.(q-1)/2) \bmod q)] / q) \& 1$

**Step4:**
Option: put the L+1 shares down to L shares
(1 XOR)

$A^1_i \rightarrow A'^1_i \rightarrow (A'^1_i, v^1_i) \rightarrow v^1_i \dashrightarrow b^1_i$

$A^2_i \rightarrow A'^2_i \rightarrow (A'^2_i, v^2_i) \rightarrow v^2_i \dashrightarrow b^2_i$

... ... ... ... ... ...

$A^j_i \rightarrow A'^j_i \rightarrow (A'^j_i, v^j_i) \rightarrow v'^j_i \dashrightarrow b^j_i$

... ... ... ...

$A^L_i \rightarrow A'^L_i \rightarrow (A'^L_i, v^L_i) \rightarrow v^L_i \dashrightarrow b^L_i$

$\rightarrow v^{L+1}_i \dashrightarrow$

$\oplus$

10

Europäisches
Patentamt

European
Patent Office

Office européen
des brevets

# EUROPEAN SEARCH REPORT

**Application Number**

EP 24 30 6399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SILA ÖZEREN ET AL: "Methods for Masking CRYSTALS-Kyber Against Side-Channel Attacks", IACR, INTERNATIONAL ASSOCIATION FOR CRYPTOLOGIC RESEARCH , vol. 20230908:063023 8 September 2023 (2023-09-08), pages 1-6, XP061081062, Retrieved from the Internet: URL:https://eprint.iacr.org/archive/2023/1340/1694154623.pdf [retrieved on 2023-09-08] * Sections II, IV.A; Algorithm 1; figure 2 * ----- | 1-9 | INV. H04L9/00 H04L9/08 H04L9/30 |
| X | JEAN-SÉBASTIEN CORON ET AL: "High-order Polynomial Comparison and Masking Lattice-based Encryption", IACR, INTERNATIONAL ASSOCIATION FOR CRYPTOLOGIC RESEARCH , vol. 20230520:172856 20 May 2023 (2023-05-20), pages 1-48, XP061077626, Retrieved from the Internet: URL:https://eprint.iacr.org/archive/2021/1615/1684603736.pdf [retrieved on 2023-05-20] * Section 5.1; Algorithm 2 * ----- -/-- | 1-9 | |

| | TECHNICAL FIELDS SEARCHED (IPC) |
|---|---|
| | H04L |

The present search report has been drawn up for all claims

| Place of search | Date of completion of the search | Examiner |
|---|---|---|
| Munich | 3 February 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 30 6399

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PIERRE-AUGUSTIN BERTHET ET AL: "Quasi-linear Masking to Protect Kyber against both SCA and FIA", IACR, INTERNATIONAL ASSOCIATION FOR CRYPTOLOGIC RESEARCH , vol. 20230811:085609 11 August 2023 (2023-08-11), pages 1-27, XP061079669, Retrieved from the Internet: URL:https://eprint.iacr.org/archive/2023/1 220/1691744169.pdf [retrieved on 2023-08-11] * pages 15, 16 * ----- | 1-9 | |
| A | TIM FRITZMANN ET AL: "Masked Accelerators and Instruction Set Extensions for Post-Quantum Cryptography", IACR, INTERNATIONAL ASSOCIATION FOR CRYPTOLOGIC RESEARCH , vol. 20210415:201027 15 April 2021 (2021-04-15), pages 1-47, XP061058976, Retrieved from the Internet: URL:https://eprint.iacr.org/2021/479.pdf [retrieved on 2021-04-15] * Section 2.2.3; Algorithm 13 * ----- | 1-9 | **TECHNICAL FIELDS SEARCHED (IPC)** |

-/--

The present search report has been drawn up for all claims

| Place of search | Date of completion of the search | Examiner |
|---|---|---|
| Munich | 3 February 2025 | Billet, Olivier |

EPO FORM 1503 03.82 (P04C01)

<table>
<tr><td colspan="3">Europäisches Patentamt<br>European Patent Office<br>Office européen des brevets</td><td>**EUROPEAN SEARCH REPORT**</td><td>**Application Number**<br><br>EP 24 30 6399</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOPPE W BOS ET AL: "Masking Kyber: First- and Higher-Order Implementations", IACR, INTERNATIONAL ASSOCIATION FOR CRYPTOLOGIC RESEARCH , vol. 20210415:202639 15 April 2021 (2021-04-15), pages 1-30, XP061058972, Retrieved from the Internet: URL:https://eprint.iacr.org/2021/483.pdf [retrieved on 2021-04-15] * Section 3.1; Algorithm 1; figure 1 * ----- | 1-9 | |
| | | | **TECHNICAL FIELDS SEARCHED (IPC)** |

The present search report has been drawn up for all claims

| Place of search | Date of completion of the search | Examiner |
|---|---|---|
| Munich | 3 February 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. AVANZI ; J. BOS ; L. DUCAS ; E. KILTZ ; T. LEPOINT ; V. LYUBASHEVSKY ; J. M. SCHANCK ; P. SCHWABE ; G. SEILER ; D. STEHLÉ**. *CRYSTALS-KYBER Algorithm Specifications And Supporting Documentation (version 3.02)*, 04 August 2021